# EUROPÄISCHE PATENTSCHRIFT

(11) **EP 1 978 790 B1**
(45) Veröffentlichungstag und Bekanntmachung des Hinweises auf die Patenterteilung: **19.05.2010**
(21) Anmeldenummer: 07006095.9
(22) Anmeldetag: 23.03.2007
(51) Int. Cl.: H05H 1/42, H05H 1/26, B05B 7/14, B05C 5/00, B05D 1/10, C23C 4/12

(54) **Vorrichtung und Verfahren zum Beschichten eines Bauteils mit Justiereinrichtung**
Device and method for coating a component and adjustment device
Dispositif et procédé destinés au revêtement d'un composant doté d'un dispositif d'ajustement

(43) Veröffentlichungstag der Anmeldung: 08.10.2008
(73) Patentinhaber: SIEMENS AKTIENGESELLSCHAFT, 80333 München (DE)
(72) Erfinder: Stadelmaier, Falk, 10559 Berlin (DE)

(56) Entgegenhaltungen:
- EP-A1- 0 542 542
- EP-A1- 1 332 799
- US-A- 4 358 471
- US-A- 5 047 612

## Beschreibung

Die Erfindung betrifft eine Vorrichtung und ein Verfahren zum Beschichten eines Bauteils, bei dem die Position von Beschichtungsmaterialquellen und/oder dem zu beschichtenden Bauteil justiert werden kann.

Beim Plasmaspritzen oder HVOF-Beschichten wird zur Überprüfung der Justierung von Düsen ein Spritzkegel, d. h. die Verteilung des Materials, überprüft. Dies geschieht mittels einer Stahlplatte, die beschichtet wird und aus der Beschichtungsanlage herausgenommen und kontrolliert werden muss. Eine solche Vorrichtung ist aus dem Patent US 4, 358, 471 bekannt. Dies bedeutet eine Unterbrechung des Beschichtungsverfahrens sowie eine qualitativ schlechte Aussage über die Justierung.

Es ist daher Aufgabe der Erfindung, eine Vorrichtung und ein Verfahren aufzuzeigen, dass das Problem aus dem Stand der Technik überwindet.

Die Aufgabe wird gelöst durch eine Vorrichtung gemäß Anspruch 1 und ein Verfahren gemäß Anspruch 8.

In den Unteransprüchen sind weitere vorteilhafte Maßnahmen aufgelistet, die beliebig miteinander kombiniert werden können, um weitere Vorteile zu erzielen.

Es zeigen
- Figur 1, 2: eine Vorrichtung und ein Verfahren nach dem Stand der Technik,
- Figur 3, 4, 5: eine erfindungsgemäße Vorrichtung zum Durchführen des erfindungsgemäßen Verfahrens,
- Figur 6: eine Gasturbine,
- Figur 7: perspektivisch eine Turbinenschaufel,
- Figur 8: perspektivisch eine Brennkammer.

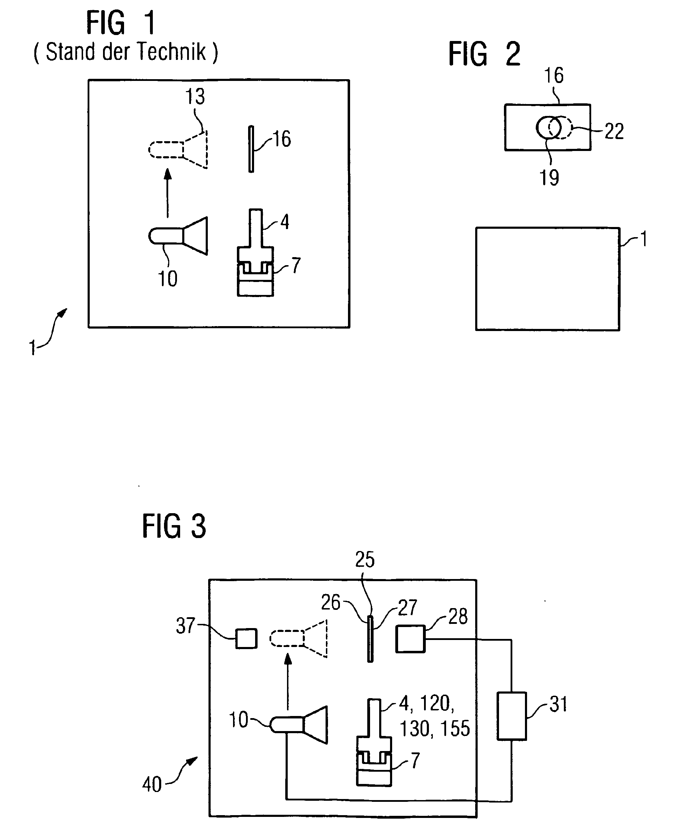

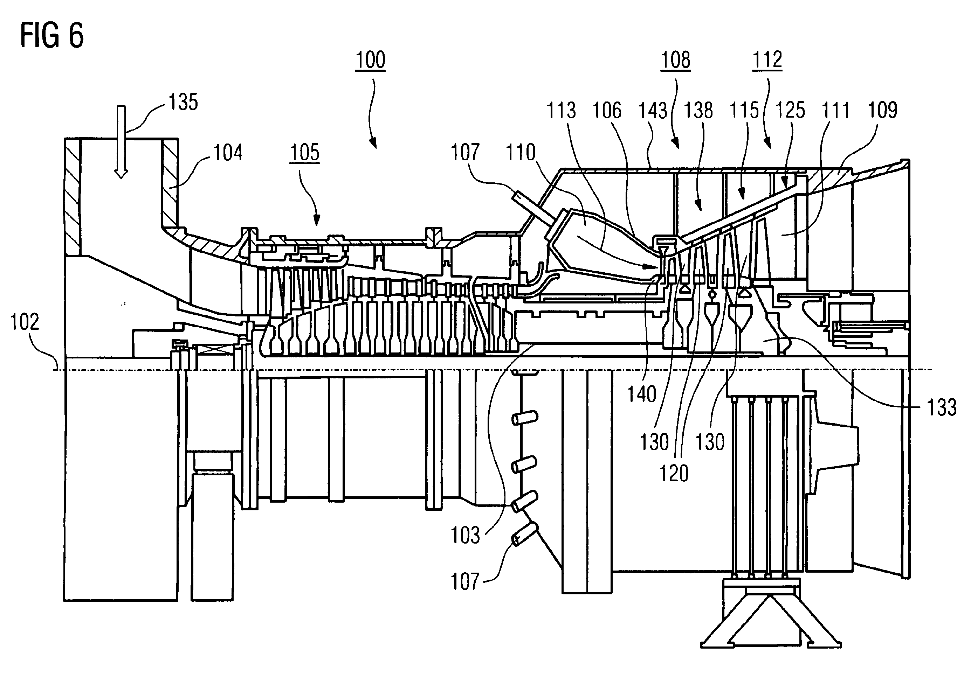

In Figur 1 ist eine Beschichtungsanlage 1 nach dem Stand der Technik gezeigt, in der ein zu beschichtendes Bauteil 4 in einer Halterung 7 vorhanden ist.
Das Bauteil 4, 120, 130, 155 (Fig. 6, 7, 8) wird mittels einer Beschichtungsmaterialquelle 10, beispielsweise mittels einer Plasmadüse (LPPS, APS, VPS,...), einer Düse einer HVOF-Beschichtungsanlage oder aus einer Düse einer Kaltgasspritzanlage oder einer sonstigen Materialquelle (beispielsweise einer PVD-, CVD-Materialquelle) beschichtet.
Zur Überprüfung mittels eines Spritzkegels wird die Beschichtungsmaterialquelle 10 in eine Position 13 verfahren, die in Figur 1 gestrichelt angedeutet ist. Dabei wird auf einer Referenzplatte 16 Beschichtungsmaterial aufgetragen. Diese wird der Beschichtungsanlage 1 entnommen und kann nur außerhalb der Beschichtungsanlage 1 untersucht werden.
Dies ist in Figur 2 dargestellt, in der die beschichtete Referenzplatte 16 außerhalb der Beschichtungsanlage 1 vorhanden ist.
Auf der Referenzplatte 16 ist eine beschichtete Fläche 19, beispielsweise ein Spritzkegel 19 vorhanden, der ggf. Abweichungen von einer Sollgeometrie 22 (gestrichelt gezeichnet) des Spritzkegels aufweist. Bei Abweichungen muss beispielsweise die Beschichtungsmaterialquelle 10 neu justiert oder ausgewechselt werden.

In Figur 3 ist eine erfindungsgemäße Vorrichtung 40 gezeigt, die zusätzlich zur Figur 1 neben einer Referenzplatte 25 aus einem beschichtbaren Material einen Sensor 28 aufweist. Die Referenzplatte 25 ist kein Teil des zu beschichtenden Bauteils 4, 120, 130, 155 (Fig. 6, 7, 8).
Die Referenzplatte 25 kann in der Beschichtungsanlage 10 ohne Öffnung der Beschichtungsvorrichtung 40, insbesondere von einem Sensor 28 untersucht werden.

Vorzugsweise ist die Referenzplatte 25 optisch untersuchbar, bevorzugt ist die Referenzplatte 25 aus Glas.

Die Referenzplatte 25 ist vorzugsweise aus einem optisch transparenten Material hergestellt, insbesondere aus einem Glas.

Die Referenzplatte 25 wird vorzugsweise vor dem Start der Beschichtung des Bauteils 4, 120, 130 beschichtet und untersucht.
Ebenso vorzugsweise kann die Referenzplatte 25 vorzugsweise zusätzlich während oder nach der kompletten Beschichtung des Bauteils 4, 120, 130, 155 beschichtet und untersucht werden und eine erneute Überprüfung der Beschichtungsmaterialquelle 10 ist möglich.

Die Referenzplatte 25 kann vorzugsweise auch während des Beschichtungsvorgangs innerhalb der Vorrichtung 40 ausgewechselt werden.

Ebenso wie beim Stand der Technik wird die Beschichtungsmaterialquelle 10 vorzugsweise in eine Position 13 (gestrichelt gezeichnet) verfahren und beschichtet, so dass ein Spritzkegel 19 auf der Referenzplatte 25 erzeugt wird.

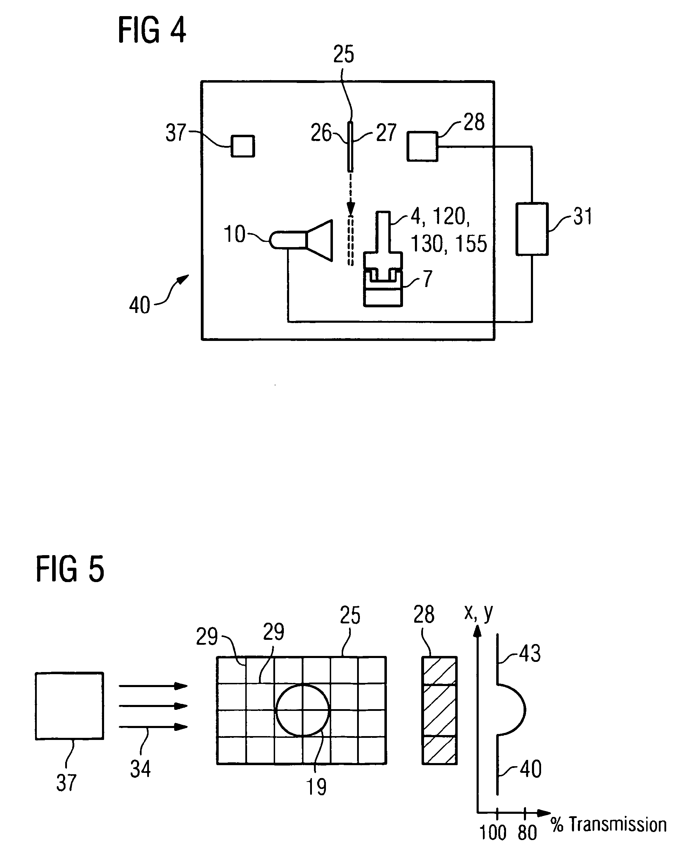

Ebenso vorzugsweise kann aber auch die Referenzplatte 25 verfahren werden, also beispielsweise zwischen Beschichtungsmaterialquelle 10 und Bauteil 4 verfahren und beschichtet werden (Figur 4) .
Dann wird sie 25 vorzugsweise zurückgefahren und vorzugsweise in einer anderen Position untersucht.

Die Vorder- 26 oder Rückseite 27 der Referenzplatte 25 kann von dem Sensor 28 untersucht werden.

Danach wird der Spritzkegel 19 auf der Referenzplatte 25 innerhalb der Anlage 40 untersucht. Dies kann durch den Sensor 28, der vorzugsweise eine Reflektion misst, erfolgen. Dabei wird die Referenzplatte 25 in einem bevorzugten Ausführungsbeispiel von dem Sensor 28 beleuchtet und gleichzeitig die Reflektion erfasst.

Ebenso vorzugsweise kann die Referenzplatte 25 mittels einer Belichtungsquelle 37 angestrahlt werden, wobei dann der Sensor 28 die Transmission der Belichtungsquelle 37 misst, so dass die Lage des Spritzkegels 19 bestimmt werden kann.

Diese Informationen (siehe Fig. 5) können vorzugsweise graphisch dargestellt und einem Operator der Vorrichtung 40 außerhalb der Vorrichtung 40 angezeigt werden. Der Operator kann die Informationen manuell auswerten.
Vorzugsweise kann eine Auswerteeinheit 31 vorhanden sein, die die Ergebnisse des Sensors 28 verarbeitet und vorzugsweise bewertet.
Die dabei gewonnenen Informationen werden vorzugsweise dazu benutzt, um die Beschichtungsmaterialquelle 10 neu zu justieren.
Dieser Schritt des Justierens kann jederzeit während des Beschichtungsverfahrens oder vor dem ersten Beschichten erfolgen.
Abweichungen des Spritzkegels 19 von der Sollgeometrie 22 können verursacht sein durch:
- Dejustierung der Düse der Beschichtungsmaterialquelle 10
- Verschleiß der Düse der Beschichtungsmaterialquelle 10
- Dejustierung des Bauteils 4, 120, 130, 155.

Die Auswertungsmethode der beschichteten Referenzplatte 25 wird anhand der Figur 5 erläutert.

In Figur 5 ist die Referenzplatte 25 mit einem Spritzkegel 19 dargestellt.
Die Belichtungsquelle 37 sendet Strahlen 34 aus, die im Bereich des Spritzkegels 19 nicht oder nur geschwächt zu dem Sensor 28 hinter der Referenzplatte 26 gelangen können. Dabei wird dann der Prozentanteil der Transmission 40 gemessen, wie es auf der rechten Seite der Figur 5 dargestellt ist.

Figur 5 zeigt nur einen Schnitt der dreidimensionalen Geometrie (x, y-Transmission) des Spritzkegels 19. Zur Auswertung werden jedoch vorzugsweise die dreidimensionalen Ergebnisse verwendet.

Mittels Gitterhilfslinien 29 auf der Referenzplatte 25 kann eine Dejustierung der Materialquelle 10 überprüft werden.

Die Vorrichtung 40 und das Verfahren haben den Vorteil, dass die Ergebnisse der Justierung automatisch ausgewertet werden können und sogar in digitalisierter Form gespeichert und archiviert werden können. Ebenfalls ist eine Korrektur der Plasmaparameter oder der Plasmadüse mittels einer Wissensdatenbank möglich.
Das Beschichtungsverfahren kann abgebrochen werden, wenn eine Dejustierung vorliegt bzw. es ist eine On-Time-Prozesskontrolle möglich.

Die Figur 6 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

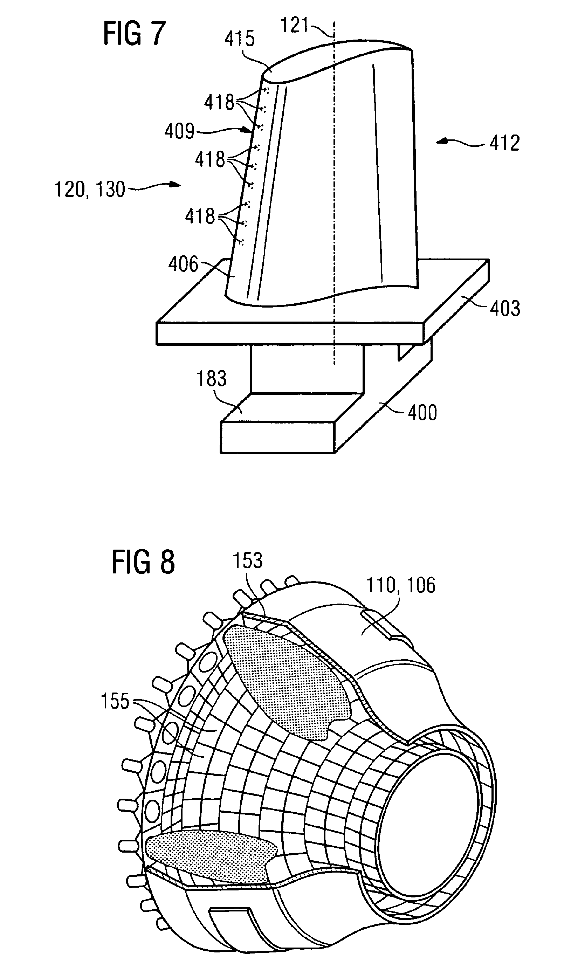

Die Figur 7 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 8 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS, LPPS, VPS) oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Beschichtungsvorrichtung (40) mit einer Beschichtungsmaterialquelle (10),
in der (40) ein zu beschichtendes Bauteil (4, 120, 130, 155) eingebaut werden kann,
und beschichtet werden kann,
**dadurch gekennzeichnet, dass**
die Beschichtungsvorrichtung (40) aufweist:
das zu beschichtende Bauteil (4)
eine durch die Beschichtungsmaterialquelle (10) beschichtbare und von dem Bauteil (4) separate Referenzplatte (25),
die (25) innerhalb der Beschichtungsvorrichtung (40) untersuchbar ist und
einen Sensor (28) zur Untersuchung der Referenzplatte (25).

2. Vorrichtung nach Anspruch 1,
die eine optisch transparente Referenzplatte (25) aufweist.

3. Vorrichtung nach Anspruch 1 oder 2,
in der eine Beleuchtungsquelle (37) vorhanden ist, die (37) die Referenzplatte (25) beleuchten kann, insbesondere eine beschichtete Seite (27) der Referenzplatte (25).

4. Vorrichtung nach Anspruch 1, 2 oder 3,
bei der die Referenzplatte (25) während eines Beschichtungsvorgangs austauschbar ist.

5. Vorrichtung nach Anspruch 1, 2, 3 oder 4,
die eine Auswerteeinheit (31) aufweist,
die (31) die Daten des Sensors (28) verarbeitet.

6. Vorrichtung nach Anspruch 1, 2, 3, 4 oder 5,
bei der die Beschichtungsmaterialquelle (10) zur Referenzplatte (25) verfahrbar ist.

7. Vorrichtung nach Anspruch 1, 2, 3, 4 oder 5,
bei der die Referenzplatte (25) zur Beschichtungsmaterialquelle (10) hin verfahrbar ist.

8. Verfahren zum Beschichten eines Bauteils (4, 120, 130, 155) mittels einer der Beschichtungsmaterialquelle (10), bei dem das Bauteil (4, 120, 130, 155) beschichtet wird, und bei dem eine von dem Bauteil (4) verschiedene Referenzplatte (25) durch die Beschichtungsmaterialquelle (10) beschichtet wird und
wobei das Beschichtungsergebnis auf der Referenzplatte (25) innerhalb der Beschichtungsvorrichtung (40) mittels eines Sensors (28) in der Beschichtungsvorrichtung (40),
untersucht wird.

9. Verfahren nach Anspruch 8,
bei dem eine Auswerteeinheit (31) die Daten des Sensors (28) verarbeitet.

10. Verfahren nach Anspruch 8,
bei dem eine optisch untersuchbare Referenzplatte (25) verwendet wird.

11. Verfahren nach Anspruch 8, 9 oder 10,
bei dem eine optisch transparente Referenzplatte (25) verwendet wird.

12. Verfahren nach Anspruch 8, 9, 10 oder 11,
bei dem eine nicht beschichtete Seite (27) der Referenzplatte (25) von dem Sensor (28) untersucht wird.

13. Verfahren nach Anspruch 8, 9, 10 oder 11,
bei dem eine beschichtete Seite (26) der Referenzplatte (25) von dem Sensor (28) untersucht wird.

14. Verfahren nach Anspruch 8, 9, 10, 11, 12 oder 13,
bei dem die Bewertung der Referenzplatte (25) zur Justierung der Beschichtungsmaterialquelle (10) verwendet wird.

15. Verfahren nach Anspruch 8, 9, 10, 11, 12, 13 oder 14, bei dem die Bewertung der Referenzplatte (25) zur Auswechslung der Beschichtungsmaterialquelle (10) führt.

16. Verfahren nach Anspruch 8, 10, 11, 12, 13, 14 oder 15, bei dem die Beschichtung der Referenzplatte (25) vor dem ersten Beschichten des Bauteils (4, 120, 130, 155) erfolgt.

17. Verfahren nach Anspruch 8, 10, 11, 12, 13, 14, 15 oder 16,
bei dem die Beschichtung der Referenzplatte (25) während der Beschichtung des Bauteils (4, 120, 130, 155) erfolgt.

18. Verfahren nach einem oder mehreren der Ansprüche 8 oder 10 bis 17,
bei dem die Beschichtung der Referenzplatte (25) nach der kompletten Beschichtung des Bauteils (4, 120, 130, 155) erfolgt.

19. Verfahren nach einem oder mehreren der Ansprüche 8, 10 bis 18,
bei dem die Beschichtungsmaterialquelle (10) zur Referenzplatte (25) verfahren wird,
um die Referenzplatte (25) zu beschichten.

20. Verfahren nach einem oder mehreren der Ansprüche 8, 10 bis 18,
bei dem die Referenzplatte (25) zur Beschichtungsmaterialquelle (10) verfahren wird,
um die Referenzplatte (25) zu beschichten.

21. Verfahren nach einem oder mehreren der Ansprüche 8, 10 bis 20,
das beim Plasmaspritzen, HVOF Beschichten oder Kaltgasspritzen verwendet wird.

22. Verfahren nach einem oder mehreren der Ansprüche 8, 10 bis 20,
das beim PVD- oder CVD-Verfahren verwendet wird.

## Claims

1. Coating apparatus (40) having a coating material source (10),
in which (40) a component (4, 120, 130, 155) that is to be coated can be fitted,
and can be coated,
**characterized in that**
the coating apparatus (40) includes:
the component (4) that is to be coated,
a reference plate (25) separate from the component (4), which can be coated by the coating material source (10),
which (25) can be examined within the coating apparatus (40),
and a sensor (28) for examining the reference plate (25).

2. Apparatus according to Claim 1,
which has an optically transparent reference plate (25).

3. Apparatus according to Claim 1 or 2,
in which there is an illumination source (37),
which (37) can illuminate the reference plate (25), in particular a coated side (27) of the reference plate (25).

4. Apparatus according to Claim 1, 2 or 3,
in which the reference plate (25) can be exchanged during a coating operation.

5. Apparatus according to Claim 1, 2, 3 or 4,
which has an evaluation unit (31)
which (31) processes the data from the sensor (28).

6. Apparatus according to Claim 1, 2, 3, 4 or 5,
in which the coating material source (10) is displaceable toward the reference plate (25).

7. Apparatus according to Claim 1, 2, 3, 4 or 5,
in which the reference plate (25) is displaceable toward the coating material source (10).

8. Process for coating a component (4, 120, 130, 155) by means of a coating material source (10),
in which the component (4, 120, 130, 155) is coated,
and in which a reference plate (25), different from the component (4), is coated by the coating material source (10), and
wherein the coating results on the reference plate (25) are examined within the coating apparatus (40), by means of a sensor (28) in the coating apparatus (40).

9. Process according to Claim 8,
in which an evaluation unit (31) processes the data from the sensor (28).

10. Process according to Claim 8,
in which a reference plate (25) that can be optically examined is used.

11. Process according to Claim 8, 9 or 10,
in which an optically transparent reference plate (25) is used.

12. Process according to Claim 8, 9, 10 or 11,
in which an uncoated side (27) of the reference plate (25) is examined by the sensor (28).

13. Process according to Claim 8, 9, 10 or 11,
in which a coated side (26) of the reference plate (25) is examined by the sensor (28).

14. Process according to Claim 8, 9, 10, 11, 12 or 13,
in which the evaluation of the reference plate (25) is used to align the coating material source (10).

15. Process according to Claim 8, 9, 10, 11, 12, 13 or 14,
in which the evaluation of the reference plate (25) leads to the coating material source (10) being replaced.

16. Process according to Claim 8, 10, 11, 12, 13, 14 or 15,
in which the coating of the reference plate (25) takes place prior to the first coating of the component (4, 120, 130, 155).

17. Process according to Claim 8, 10, 11, 12, 13, 14, 15 or 16,
in which the coating of the reference plate (25) takes place during the coating of the component (4, 120, 130, 155).

18. Process according to one or more of Claims 8 or 10 to 17,
in which the coating of the reference plate (25) takes place after complete coating of the component (4, 120, 130, 155).

19. Process according to one or more of Claims 8, 10 to 18,
in which the coating material source (10) is moved toward the reference plate (25), in order to coat the reference plate (25).

20. Process according to one or more of Claims 8, 10 to 18,
in which the reference plate (25) is moved toward the coating material source (10), in order to coat the reference plate (25).

21. Process according to one or more of Claims 8, 10 to 20, which is used in plasma spraying, HVOF coating or cold spraying.

22. Process according to one or more of Claims 8, 10 to 20, which is used in the PVD or CVD process.

## Revendications

1. Dispositif ( 40 ) de revêtement comprenant une source ( 10 ) de matière de revêtement,
dans lequel (40) un élément (4, 120, 130, 155 ) a revêtir peut être inséré,
et peut être revêtu,
**caractérisé en ce que**
le dispositif ( 40 ) de revêtement comporte :
l'élément ( 4 ) à revêtir,
une plaque ( 25 ) de référence pouvant être revêtue par la source ( 10 ) de matière de revêtement et distincte de l'élément ( 4 ),
qui ( 25 ) peut être examinée à l'intérieur du dispositif ( 40 ) de revêtement et
un capteur ( 28 ) pour examiner la plaque ( 25 ) de référence.

2. Dispositif suivant la revendication 1,
qui a une plaque ( 25 ) de référence transparente du point de vue optique.

3. Dispositif suivant la revendication 1 ou 2,
dans lequel il y a une source ( 37 ) d'éclairage, qui ( 37 ) peut éclairer la plaque ( 25 ) de référence, notamment une face ( 27 ) non revêtue de la plaque ( 25 ) de référence.

4. Dispositif suivant la revendication 1, 2 ou 3,
dans lequel la plaque ( 25 ) de référence peut être remplacée pendant une opération de revêtement.

5. Dispositif suivant la revendication 1, 2, 3 ou 4, qui a une unité ( 31 ) d'exploitation, qui ( 31 ) traite les données du capteur ( 28 ).

6. Dispositif suivant la revendication 1, 2, 3, 4 ou 5,
dans lequel la source ( 10 ) de matière de revêtement peut être déplacée par rapport à la plaque ( 25 ) de référence.

7. Dispositif suivant la revendication 1, 2, 3, 4 ou 5,
dans lequel la plaque ( 25 ) de référence peut être déplacée par rapport à la source ( 10 ) de matière de revêtement.

8. Procédé pour revêtir un élément ( 4, 120, 130, 155 ) au moyen d'une source ( 10 ) de matière de revêtement,
dans lequel on revêt l'élément ( 4, 120, 130, 155 ), et dans lequel on revêt une plaque ( 25 ) de référence différente de l'élément ( 4 ) par la source ( 10 ) de matière de revêtement et
dans lequel on examine le résultat du revêtement sur la plaque ( 25 ) de référence dans le dispositif ( 40 ) de revêtement
au moyen d'un capteur ( 28 ) dans le dispositif ( 40 ) de revêtement.

9. Procédé suivant la revendication 8,
dans lequel une unité ( 31 ) d'exploitation traite les données du capteur ( 28 ).

10. Procédé suivant la revendication 8,
dans lequel on utilise une plaque ( 25 ) de référence pouvant être examinée optiquement.

11. Procédé suivant la revendication 8, 9 ou 10,
dans lequel on utilise une plaque ( 25 ) de référence transparente du point de vue optique.

12. Procédé suivant la revendication 8, 9, 10 ou 11,
dans lequel on examine par le capteur ( 28 ) une face ( 27 ) non revêtue de la plaque ( 25 ) de référence.

13. Procédé suivant la revendication 8, 9, 10 ou 11,
dans lequel on examine par le capteur ( 28 ) une face ( 26 ) revêtue de la plaque ( 25 ) de référence.

14. Procédé suivant la revendication 8, 9, 10, 11, 12 ou 13,
dans lequel on utilise l'évaluation de la plaque ( 25 ) de référence pour ajuster la source ( 10 ) de matière de revêtement.

15. Procédé suivant la revendication 8, 9, 10, 11, 12, 13 ou 14,
dans lequel l'évaluation de la plaque ( 25 ) de référence entraîne le remplacement de la source ( 10 ) de la matière de revêtement.

16. Procédé suivant la revendication 8, 9, 10, 11, 12, 13, 14 ou 15,
dans lequel on effectue le revêtement de la plaque ( 25 ) de référence avant le premier revêtement de l'élément ( 4, 120, 130, 155 ).

17. Procédé suivant la revendication 8, 9, 10, 11, 12, 13, 14, 15 ou 16,
dans lequel on effectue le revêtement de la plaque ( 25 ) de référence avant le revêtement de l'élément ( 4, 120, 130, 155 ).

18. Procédé suivant l'une ou plusieurs des revendications 8 ou 10 à 17,
dans lequel on effectue le revêtement de la plaque ( 25 ) de référence après avoir revêtu complètement l'élément ( 4, 120, 130, 155 ).

19. Procédé suivant l'une ou plusieurs des revendications 8, 10 à 18,
dans lequel on déplace la source ( 10 ) de matière de revêtement par rapport à la plaque ( 25 ) de référence, pour revêtir la plaque ( 25 ) de référence.

20. Procédé suivant l'une ou plusieurs des revendications 8, 10 à 18,
dans lequel on déplace la plaque ( 25 ) de référence par rapport à la source ( 10 ) de matière de revêtement,
pour revêtir la plaque ( 25 ) de référence.

21. Procédé suivant l'une ou plusieurs des revendications 8, 10 à 20,
dans lequel on l'utilise dans la projection au plasma, le revêtement HVOF ou la projection au gaz froid.

22. Procédé suivant l'une ou plusieurs des revendications 8, 10 à 20,
dans lequel on l'utilise dans le procédé PVD ou le procédé CVD.
